# EUROPÄISCHE PATENTANMELDUNG

(11) **EP 1 418 489 A2**
(43) Veröffentlichungstag der Anmeldung: **12.05.2004**
(21) Anmeldenummer: 03022495.0
(22) Anmeldetag: 09.10.2003
(51) Int. Cl.: G06F 1/20

(54) **Computer mit Kühlvorrichtung**

(30) Priorität: 05.11.2002 DE 10251540
(71) Anmelder: Medion AG, 45127 Essen (DE)
(72) Erfinder: Reineke, Andreas, 33100 Paderborn (DE)
(74) Vertreter: Becker, Thomas U., Dr.

(57) **Zusammenfassung**

Die Erfindung betrifft einen Computer, der ein Gehäuse aufweist, in dem mindestens eine Kühlvorrichtung und mindestens ein zu kühlendes elektrisches Bauteil angeordnet sind. Das Gehäuse weist mindestens eine Lüftungsöffnung auf, wobei diese auf der dem elektrischen Bauteil gegenüberliegenden Seite des Gehäuses angeordnet ist. Zwischen der Lüftungsöffnung und dem Bauteil ist die Kühlvorrichtung so angeordnet, dass eine im wesentlichen geradlinige Luftströmung innerhalb des Gehäuses auf das Bauteil entsteht.

## Beschreibung

Die Erfindung betrifft einen Computer mit einem Gehäuse, in dem mindestens eine Kühlvorrichtung und mindestens ein zu kühlendes elektrisches Bauteil angeordnet sind.

Computer der vorgenannten Art sind allgemein bekannt. Diese werden üblicherweise mit einer Kühlvorrichtung ausgeliefert, um die innerhalb des Gehäuses sich befindenden elektrischen Bauteile, wie die CPU (central processing unit = Zentrale Verarbeitungseinheit) zu kühlen. Von einer aktiven Kühlung profitieren neben CPU beispielsweise auch die Grafikkarte und das Netzteil. Je nach Anforderungen kann es auch sinnvoll sein, die Festplatten oder gar die Laufwerke zu kühlen.

Es ist bekannt, dass eine im Betrieb befindliche CPU eines Computers einen großen Wärmestrom erzeugt. Mit dem Fortschreiten der technologischen Entwicklung lässt sich des weiteren erkennen, dass die Arbeitsgeschwindigkeit einer CPU stetig angestiegen ist, welches zur Folge hat, dass der erzeugte Wärmestrom einer in Betrieb befindlichen CPU ebenfalls zugenommen hat. Dies bedeutet, dass die heutigen CPUs immer mehr Wärme erzeugen. Eine nicht ausreichende Kühlung führt zu Fehlfunktionen im Computer. Die bekannten Kühlvorrichtungen lösen das Problem nicht ausreichend.

Um einen genügend großen Luftstrom aus der Umgebung in den Computer zu befördern, ist es bekannt, dass das Gehäuse an seiner Rückwand Öffnungen aufweist. Während des Betriebes der Kühlvorrichtung strömt durch die Öffnungen der Rückwand kühlere Umgebungsluft in das Innere des Gehäuses. Die Luftströmung ist jedoch innerhalb des Computers ungerichtet, da aufgrund diverser Bauteile innerhalb des Gehäuses es zu einer Vielzahl von Luftverwirbelungen kommt. Dieses hat zur Folge, dass sich die kühlere Umgebungsluft mit der wärmeren Luft innerhalb des Gehäuses vermischt. Die Temperatur des Luftstromes, den ein in der Kühlungsvorrichtung angeordneter Lüfter auf die an der Seitenwand befestigte CPU befördert, ist folglich erheblich höher als die tatsächliche Temperatur der Umgebungsluft, mit welcher eine effektivere Kühlung der CPU erzielbar wäre.

Es ist ebenso bekannt, einen Krümmer beziehungsweise einen Tunnel zu verwenden, um ausschließlich die kühlere Umgebungsluft zur Kühlung der CPU zu nutzen. Der Krümmer ist in den meisten Fällen ein flexibler Schlauch, der ausgehend von der Rückwand des Gehäuses bis zu der an der Seitenwand befestigten CPU verläuft. Damit wird eine effizientere Kühlung der CPU erreicht. Nachteilig ist jedoch, dass der Krümmer viel Platz und Montageaufwand benötigt.

Der Erfindung liegt die Aufgabe zugrunde, einen Computer weiterzubilden, mit dem die beschriebenen Probleme vermieden werden können.

Zur Lösung dieser Aufgabe wird ein Computer mit den Merkmalen des Anspruches 1 vorgeschlagen.

Der Computer weist ein Gehäuse auf, in dem mindestens eine Kühlvorrichtung und mindestens ein zu kühlendes elektrisches Bauteil angeordnet sind. Das Gehäuse weist mindestens eine Lüftungsöffnung auf, wobei diese auf der dem elektrischen Bauteil gegenüberliegenden Seite des Gehäuses angeordnet ist. Zwischen der Lüftungsöffnung und dem Bauteil ist die Kühlvorrichtung so angeordnet, dass eine im wesentlichen geradlinige Luftströmung innerhalb des Gehäuses auf das Bauteil entsteht. Hierdurch wird eine direkte Luftführung auf kurzem Wege von der einen Seite des Gehäuses zur gegenüberliegenden Seite erzielt, wo das zu kühlende Bauteil, beispielsweise eine CPU, befestigt ist.

Aufgrund der direkten Luftführung erwärmt sich die angesaugte Umgebungsluft nicht wesentlich innerhalb des Computergehäuses, so dass eine gute Kühlwirkung der CPU erreicht wird. Des weiteren kann ein Lüfter mit einer niedrigeren Drehzahl verwendet werden, welches gleichzeitig mit einer geringeren Geräuschentwicklung verbunden ist.

Ein weiterer Vorteil dieser Erfindung ist, dass auf der der CPU gegenüberliegenden Seite des Gehäuses die Lüftungsöffnungen angeordnet ist. Im Gegensatz dazu sind bei handelsüblichen Computergehäusen, die neben Boden- und Deckplatte zwei parallel zueinander stehende Seitenwände sowie eine Vorderund Rückwand aufweisen, an der Rückwand Lüftungsöffnungen angeordnet. Nachteil hierbei ist, dass die Umgebungsluft durch die in der Rückwand angeordneten Lüftungsöffnungen angesaugt wird, jedoch die Umgebungsluft nicht direkt auf die an der Seitenwand befestigten CPU gerichtet ist. Die Umgebungsluft vermischt sich somit zunächst mit der sich im Gehäuse befindenden wärmeren Luft bevor sie auf die CPU trifft. Durch die Verwendung einer Lüftungsöffnung auf der gegenüberliegenden Seitenwand der CPU wird eine im wesentlichen direkte Luftführung auf die CPU erreicht, das heisst, die genannten Krümmer entfallen.

Die vorliegende Erfindung nutzt des weiteren den Vorteil des geringen Abstandes der gegenüberliegenden Seitenwände aus.

Folglich kann die Kühlleistung der CPU durch den erfindungsgemäßen Gegenstand erhöht werden, was insbesondere im Sommer wichtig ist. Bei Umgebungstemperaturen von 30° wird es in dem engen Computergehäuse besonders heiss, das bedeutet, dass Temperaturen von 40 bis 50° keine Seltenheit sind.

Durch die gute Kühlwirkung der vorliegenden Erfindung können leistungsschwächere Kühlvorrichtung verwendet werden, welche beispielsweise geringere Abmaße und/oder einen geringen Leistungsbedarf haben. Damit lassen sich Geräusche und Stromkosten reduzieren.

Bei einer Ausgestaltung der Erfindung ist der Bereich des Gehäuses, der die Lüftungsöffnung aufweist, in Richtung der gegenüberliegenden Seite des Gehäuses versetzt. In anderen Worten ausgedrückt, die mit der Lüftungsöffnung ausgebildete Seitenwand des Gehäuses ist in den Innenraum des Computers gewölbt. Damit wird eine weitere Verringerung des Abstandes zur gegenüberliegenden Seitenwand bewirkt, an der sich die CPU befindet.

Gemäß einer Ausführungsform liegen horizontale Achsen der Kühlvorrichtung, des Bauteiles und des die Lüftungsöffnung aufweisenden Bereiches des Gehäuses in einer Ebene. Eine solche Anordnung ermöglicht es, die angesaugte Umgebungsluft im wesentlichen geradlinig auf das zu kühlende elektrische Bauteil zu richten.

Das Gehäusen kann quaderförmig sein und beispielsweise aus Leichtmetall bestehen. Wichtig für die Erfindung ist, dass zwischen den Gehäusewänden, die einen geringen Abstand zueinander aufweisen, die Kühlvorrichtung angeordnet ist.

Neben einer CPU als zu kühlendes Bauteil können auch andere Wärme erzeugenden Bauteile wie Festplatte, Graphikkarte usw. gekühlt werden.

Die Kühlvorrichtung kann einen Lüfter und einen Kühlkörper umfassen. Der Kühlkörper besteht aus gut Wärme leitenden Materialien und sorgt dafür, dass die von der CPU erzeugte Wärme auf den Kühlkörper übertragen wird. Der Lüfter kann ein normaler "Ventilator" sein. Die auf den Kühlkörper auftretende Luft nimmt aufgrund des Temperaturgefälles Wärme des Kühlkörpers auf und kühlt die CPU. Um eine kompakte Kühlvorrichtung zu schaffen, besteht die Möglichkeit, Lüfter und Kühlkörper beziehungsweise CPU und Kühlkörper als ein Bauteil zu gestalten.

Zwischen Kühlkörper und zu kühlendem Bauteil kann ein Wärmeleitmedium angeordnet sein, beispielsweise eine Wärmeleitpaste, die auf die CPU aufgetragen ist. Die Wärmeleitpaste kann beispielsweise auf Silikonbasis beruhen oder aus Metallen beziehungsweise deren Oxiden bestehen. Die letztgenannten weisen den Vorteil auf, dass sie besser wärmeleitend sind als Silikonpasten.

In dem Raum zwischen gegenüberliegenden Gehäusewänden liegen nebeneinander: das elektrische Bauteil, ggf. eine Kühleinrichtung, der Lüfter. Ein etwaig verbleibender Raum kann mit einer Einrichtung ausgefüllt werden, entlang der die Kühlluft transportiert wird. Diese Einrichtung kann ein Rohr sein. Die Einrichtung/Verlängerung kann auch Bestandteil des Lüfters oder der Kühlvorrichtung sein.

Die Einrichtung kann aus einem flexiblen Material bestehen. Hierbei ist als Einrichtung eine Verwendung eines flexiblen Spiralschlauches denkbar.

Das Gehäuse kann weitere Öffnungen zum Luftaustausch aufweisen.

Entlang des Luftweges zur Kühlung des Bauteils kann ein Filter angeordnet sein.

Bei einer Ausführungsform kann der Kühlkörper aus Metall bestehen, insbesondere aus Aluminium oder Kupfer.

Der Kühlkörper kann ein passives Kühlelement beispielsweise in Form von Kühlrippen sein.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispiels näher beschrieben. Dabei zeigt -jeweils in stark schematisierter Darstellung -

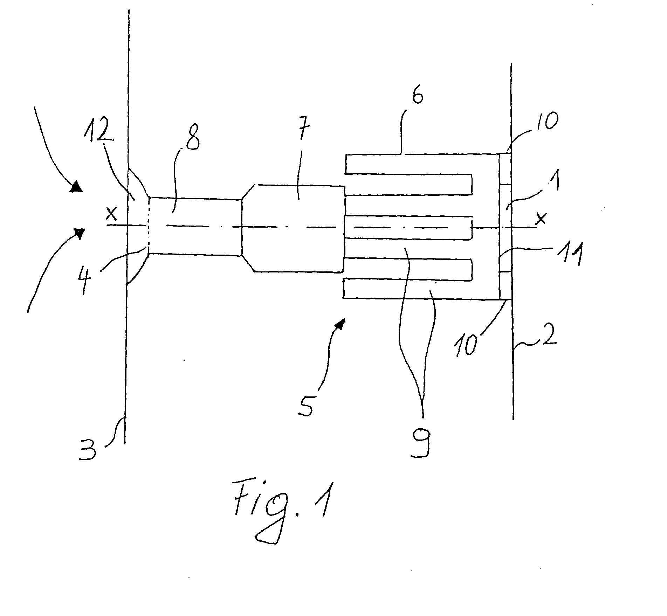

Figur 1: eine erfindungsgemäße Ausführungsform des Computers.

Fig. 1 zeigt einen Längsschnitt durch ein Computergehäuse. Zu erkennen sind eine linke Gehäusewand 3 und eine rechte Gehäusewand 2. Eine CPU 1 ist an der Gehäusewand 2 befestigt. Auf der Oberfläche der CPU 1 liegt eine Kühlvorrichtung 5 an, nämlich ein Kühlkörper 6, der die entstehende Wärme der CPU 1 aufgrund seiner gut Wärme leitenden Materialeigenschaften aufnimmt und abführt.

Der Kühlkörper 6 ist mit Rippen 9 ausgebildet, wodurch sich die Oberfläche des Kühlkörpers 6 um ein Vielfaches erhöht und somit auch der Wärmeaustausch gesteigert werden kann. Der Kühlkörper 6 ist mit Schrauben 10 an der Seitenwand 2 befestigt. Um die Wärmeleitung zwischen CPU 1 und Kühlkörper 6 zu verbessern, ist zwischen diesen Bauteilen eine Wärmeleitpaste 11 angeordnet.

Auf dem Kühlkörper 6 befindet sich der Lüfter 7 (Ventilator), der kühle Umgebungsluft in den Innenraum des Computers saugt und in Richtung des Kühlkörpers 6, der die Wärme der CPU 1 aufnimmt, bläst. Auf der der CPU 1 gegenüberliegenden Seitenwand 3 sind Lüftungsöffnungen 4 angeordnet, durch die die Umgebungsluft in das Gehäuse strömt. Die Seitenwand 3 ist im Bereich der Öffnungen 4 in Richtung der gegenüberliegenden Seitenwand 2 versetzt. Dadurch ergibt sich eine sickenförmige Vertiefung 12 in der Seitenwand 3. Zwischen der mit Lüftungsöffnungen 4 ausgebildeten Seitenwand 3 und dem Lüfter 7 befindet sich ein zylinderförmiges Rohr 8, durch das die Umgebungsluft in Richtung Lüfter 7 strömt. Das Rohr 8 ist hierbei lösbar mit dem Lüfter 7 sowie mit der Seitenwand 3 verbunden.

Bei der vorliegenden Ausführungsform strömt die Umgebungsluft, ohne sich mit der wärmeren Luft innerhalb des Gehäuses zu vermischen, im wesentlichen geradlinig auf die CPU 1 (Achse X-X). Hierbei nimmt die kühlere Umgebungsluft Wärme des Kühlkörpers 6 auf, wodurch mittelbar eine Kühlung der CPU 1 bewirkt wird. Die mit Wärme beladene Luft kann beispielsweise durch Abluftöffnungen, die nicht dargestellt sind, aus dem Computergehäuse abgeführt werden.

## Patentansprüche

1. Computer mit
a) einem Gehäuse, in dem mindestens
b) eine Kühlvorrichtung (5) und
c) ein zu kühlendes elektrisches Bauteil (1) angeordnet sind, wobei
d) das Gehäuse mindestens eine Lüftungsöffnung (4) aufweist,
e) die Lüftungsöffnung (4) auf der dem elektrischen Bauteil (1) gegenüberliegenden Seite des Gehäuses angeordnet ist,
f) zwischen der Lüftungsöffnung (4) und dem Bauteil (1) die Kühlvorrichtung (5) so angeordnet ist, dass eine im wesentlichen geradlinige Luftströmung innerhalb des Gehäuses auf das Bauteil (1) entsteht.

2. Computer nach Anspruch 1, wobei der Bereich des Gehäuses, der die Lüftungsöffnung (4) aufweist, in Richtung der gegenüberliegenden Seite des Gehäuses versetzt ist.

3. Computer nach Anspruch 1, wobei horizontale Achsen der Kühlvorrichtung (5), des Bauteiles (1) und des die Lüftungsöffnung (4) aufweisenden Bereiches des Gehäuses in einer Ebene liegen.

4. Computer nach Anspruch 1, wobei das Gehäuse quaderförmig ist.

5. Computer nach Anspruch 1, wobei das Bauteil (1) eine zentrale Datenverarbeitungseinheit ist.

6. Computer nach Anspruch 1, wobei die Kühlvorrichtung (5) einen Lüfter (7) und einen Kühlkörper (6) umfasst.

7. Computer nach Anspruch 6, wobei der Kühlkörper (6) an der zentralen Datenverarbeitungseinheit (1) anliegt.

8. Computer nach Anspruch 7, wobei zwischen Kühlkörper (6) und der zentralen Datenverarbeitungseinheit (1) ein Wärmeleitmedium (11) angeordnet ist.

9. Computer nach Anspruch 6, der eine Einrichtung (8) aufweist, die zwischen dem Lüfter (7) und der Lüftungsöffnung (4) angeordnet ist.

10. Computer nach Anspruch 6, der eine Einrichtung (8) aufweist, die zwischen dem Kühlkörper (6) und dem Lüfter (7) angeordnet ist.

11. Computer nach Anspruch 9 und 10, wobei die Einrichtung (8) zylinderförmig ist.

12. Computer nach Anspruch 9 und 10, wobei die Einrichtung (8) aus flexiblen Material besteht.

13. Computer nach Anspruch 1, wobei das Gehäuse eine Vielzahl von Lüftungsöffnungen (4) aufweist.

14. Computer nach Anspruch 13, wobei der die Lüftungsöffnungen (4) aufweisende Bereich des Gehäuses kreisförmig ist.

15. Computer nach Anspruch 1, wobei das Gehäuse Öffnungen zum Luftaustritt aufweist.

16. Computer nach Anspruch 1, wobei entlang des Strömungsweges der Luft ein Filter angeordnet ist.

17. Computer nach Anspruch 6, wobei der Kühlkörper (6) aus Metall besteht, insbesondere aus Aluminium oder Kupfer.

18. Computer nach Anspruch 6, wobei der Kühlkörper (6) mit Rippen (9) ausgebildet ist.
